# EUROPEAN PATENT SPECIFICATION

(11) **EP 3 032 078 B1**
(45) Date of publication and mention of the grant of the patent: **19.07.2017**
(21) Application number: 15198592.6
(22) Date of filing: 09.12.2015
(51) Int. Cl.: F02D 41/02, F01N 3/20, F02D 41/00, F02D 9/04, F02D 9/06

(54) **CONTROL DEVICE FOR INTERNAL COMBUSTION ENGINE**
STEUERUNGSVORRICHTUNG FÜR EINEN VERBRENNUNGSMOTOR
DISPOSITIF DE CONTRÔLE POUR MOTEUR À COMBUSTION INTERNE

(30) Priority: 12.12.2014 JP 2014252271
(43) Date of publication of application: 15.06.2016
(73) Proprietor: Toyota Jidosha Kabushiki Kaisha, Toyota-shi, Aichi-ken 471-8571 (JP)
(72) Inventor: OTA, Hirohiko, Toyota-shi,, Aichi 471-8571 (JP)
(74) Representative: TBK

(56) References cited:
- EP-A1- 2 716 892
- US-A1- 2009 025 370

## Description

### BACKGROUND OF THE INVENTION

### 1. Field of the Invention

The invention relates to a control device for an internal combustion engine.

### 2. Description of Related Art

An internal combustion engine that is provided with a catalyst which purifies exhaust gas of nitrogen oxide (NOx) is known. An adding mechanism that adds a reducing agent such as urea water to the exhaust gas is disposed in the internal combustion engine and ammonia derived from the reducing agent is adsorbed onto the catalyst. The NOx is subjected to reduction purification by the ammonia that is adsorbed on the catalyst.

The amount of the ammonia that is desorbed from the catalyst increases as the temperature of the exhaust gas increases. Then, a so-called ammonia slip is likely to occur. In the case of an internal combustion engine that is provided with an exhaust gas recirculation device which allows some of exhaust gas to return to an intake passage, examples of which include the internal combustion engine that is disclosed in Japanese Patent Application Publication No. 2013-144938 (JP 2013-144938 A), the amount of the NOx that is generated in the internal combustion engine increased based on a decrease in an EGR amount as the amount of the exhaust gas which returns to the intake passage. It is conceivable the occurrence of the ammonia slip is suppressed when the increased amount of the NOx and the ammonia desorbed from the catalyst react with each other.

### SUMMARY OF THE INVENTION

However, the amount of the exhaust gas that returns to the intake passage decreases when the EGR amount is decreased, and thus the flow rate of the exhaust gas in an exhaust passage increases. When the exhaust gas flow rate increases as described above, the length of time required for the exhaust gas to pass through the catalyst (length of time for the exhaust gas to come out of the catalyst after moving into the catalyst) decreases, and thus the length of time of the NOx-ammonia reaction in the catalyst decreases. Accordingly, a state could arise where the reaction between the increased amount of the NOx and the ammonia desorbed from the catalyst is not in time, which still could result in the ammonia slip.

The invention provides a control device for an internal combustion engine that allows the suppression of an ammonia slip based on a decrease in an EGR amount to be appropriately performed.

According to an aspect of the invention, a control device for an internal combustion engine is provided. The internal combustion engine includes exhaust gas recirculation devices, an adding mechanism, a catalyst, and an exhaust gas flow rate adjusting mechanism. The exhaust gas recirculation devices are configured to allow some of exhaust gas in an exhaust passage of the internal combustion engine to return to an intake passage. The adding mechanism is configured to add a reducing agent containing an ammonia component into the exhaust passage. The catalyst is configured to purify NOx in the exhaust gas by using ammonia derived from the reducing agent. The exhaust gas flow rate adjusting mechanism is configured to adjust a flow rate of the exhaust gas flowing into the catalyst. The catalyst is positioned on a downstream side of the adding mechanism and the exhaust gas flow rate adjusting mechanism in the exhaust passage.

The control device includes an electronic control unit. The electronic control unit is configured to control the exhaust gas recirculation devices as EGR amount-decreasing processing when an ammonia slip occurrence condition with regard to the catalyst is satisfied such that an EGR amount as the amount of the exhaust gas returning to the intake passage is smaller when the occurrence condition is not satisfied than when the occurrence condition is satisfied. The electronic control unit is configured to control the exhaust gas flow rate adjusting mechanism as exhaust gas amount-decreasing processing when the EGR amount-decreasing processing is executed such that the flow rate of the exhaust gas during the execution of the EGR amount-decreasing processing is lower than during a non-execution of the EGR amount-decreasing processing.

In the control device according to this aspect, the EGR amount-decreasing processing is executed when the ammonia slip occurrence condition with regard to the catalyst is satisfied. Then, the amount of the NOx that is generated in the internal combustion engine is increased, and the amount of the ammonia that is desorbed from the catalyst is decreased by a reaction with the increased amount of the NOx. During the execution of the EGR amount-decreasing processing, the exhaust gas amount-decreasing processing is executed and the flow rate of the exhaust gas is decreased. An increase in the exhaust gas flow rate that results from the execution of the EGR amount-decreasing processing is suppressed by the execution of the exhaust gas amount-decreasing processing. Accordingly, the shortening of the length of time in which the exhaust gas passes through the catalyst that is attributable to the execution of the EGR amount-decreasing processing can be suppressed, and thus time can be ensured for the reaction between the NOx and the ammonia in the catalyst. Accordingly, the suppression of an ammonia slip through a decrease in the EGR amount can be appropriately performed.

In the control device according to this aspect, the electronic control unit may be configured to control the exhaust gas flow rate adjusting mechanism such that a decrement in the flow rate of the exhaust gas attributable to the exhaust gas amount-decreasing processing increases as a decrement in the EGR amount attributable to the EGR amount-decreasing processing increases. According to this aspect, the exhaust gas flow rate decrement that is attributable to the exhaust gas amount-decreasing processing increases as the EGR amount decrement increases and an increase in the exhaust gas flow rate increases as a result of the execution of the EGR amount-decreasing processing, and thus the increase in the exhaust gas flow rate can be appropriately suppressed.

In the control device according to this aspect, the electronic control unit may be configured to set the decrement in the flow rate of the exhaust gas based on the decrement in the EGR amount attributable to the EGR amount-decreasing processing. According to this aspect, an operation amount of the exhaust gas flow rate adjusting mechanism commensurate with the EGR amount decrement can be set.

In the control device according to this aspect, the electronic control unit may include a storage device. The storage device may have a first map selected during the execution of the EGR amount-decreasing processing and setting the operation amount of the exhaust gas flow rate adjusting mechanism and a second map selected during the non-execution of the EGR amount-decreasing processing and setting an operation amount of the exhaust gas flow rate adjusting mechanism. The operation amount set when the second map is selected may be set such that the flow rate of the exhaust gas adjusted by the exhaust gas flow rate adjusting mechanism based on the operation amount set when the second map is selected is lower than when the first map is selected in the same engine operation state.

According to this aspect, switching from the first map to the second map allows the exhaust gas flow rate to be lower during the execution of the EGR amount-decreasing processing than during the non-execution of the EGR amount-decreasing processing. In a case where the internal combustion engine is provided with a variable displacement exhaust-driven turbocharger that has a movable vane, the flow rate of the exhaust gas that flows into the catalyst can be adjusted by an opening degree of the vane being adjusted, and thus the vane can be used as the exhaust gas flow rate adjusting mechanism. A decrease in the flow rate of the exhaust gas based on the exhaust gas amount-decreasing processing can be performed by the opening degree of the vane being decreased.

In the control device according to this aspect, the internal combustion engine may include the variable displacement exhaust-driven turbocharger that has the movable vane. The exhaust gas flow rate adjusting mechanism may be the movable vane. The operation amount may be the opening degree of the vane. The exhaust gas flow rate adjusting mechanism may be configured to decrease the flow rate of the exhaust gas by decreasing the opening degree of the vane.

According to this aspect, the flow rate of the exhaust gas can be decreased by the use of the vane of the exhaust-driven turbocharger, and thus the exhaust gas flow rate can be decreased without an additional exhaust gas flow rate adjusting mechanism being disposed. In this aspect, "decreasing the opening degree of the vane" means adjusting the opening degree of the vane so that the cross-sectional area of a passage of the exhaust-driven turbocharger into which the exhaust gas flows decreases.

When the opening degree of the vane is decreased so that the exhaust gas flow rate is decreased, back pressure as the pressure inside the exhaust passage increases. Accordingly, escape of the exhaust gas from a combustion chamber or the like may deteriorate and output torque of the internal combustion engine may be reduced. In this regard, a fuel injection quantity-increasing correction may be executed along with the execution of the exhaust gas amount-decreasing processing in a case where the exhaust gas amount-decreasing processing for decreasing the exhaust gas flow rate based on a decrease in the opening degree of the vane is executed. In a case where this quantity-increasing correction is executed, a reduction in the output torque that is attributable to an increase in the back pressure which results from the execution of the exhaust gas amount-decreasing processing can be suppressed by the fuel injection quantity-increasing correction.

In a case where the exhaust gas amount-decreasing processing for decreasing the exhaust gas flow rate based on a decrease in the opening degree of the vane is executed, the amount of reduction in the output torque that is attributable to an increase in the back pressure increases as a vane opening degree decrement increases. In a case where the fuel injection quantity-increasing correction described above is performed, a correction amount for the fuel injection quantity-increasing correction may increase as the vane opening degree decrement attributable to the exhaust gas amount-decreasing processing increases. Then, the amount of a correction for increasing the fuel injection quantity that is commensurate with the amount of reduction in the output torque attributable to the increase in the back pressure can be set. Accordingly, the reduction in the output torque that is attributable to an increase in the back pressure can be appropriately suppressed even in a case where the vane opening degree decrement varies.

An adsorption amount regarding the ammonia adsorbed on the catalyst can be obtained based on a reducing agent addition amount, an exhaust gas temperature, and the exhaust gas flow rate and the maximum ammonia adsorption amount allowing the adsorption onto the catalyst can be obtained from the exhaust gas temperature. Accordingly, in a case where the ammonia adsorption amount regarding the catalyst is smaller than the maximum ammonia adsorption amount obtained from the exhaust gas temperature, the ammonia that is adsorbed on the catalyst is desorbed and a slip amount of the ammonia pertaining to this case can be obtained by subtracting the maximum ammonia adsorption amount from the amount of the ammonia that is adsorbed on the catalyst.

The ammonia slip occurrence condition described above may include an operation condition of the internal combustion engine in which the slip amount of the ammonia desorbed from the catalyst is at least a predetermined threshold. In this case, an appropriate determination can be made as to the presence or absence of a state where the ammonia slip occurs. As a result, an appropriate determination can be made as to the presence or absence of a state where the execution of the EGR amount-decreasing processing and the exhaust gas amount-decreasing processing is required.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a schematic drawing illustrating an internal combustion engine to which a control device for an internal combustion engine according to an embodiment is applied and a peripheral configuration thereof;
FIG. 2 is a graph illustrating how a basic vane opening degree is set;
FIG. 3 is a graph illustrating how a basic EGR amount is set;
FIG. 4 is a graph illustrating a relationship between a catalyst temperature and an ammonia adsorption amount;
FIG. 5 is a flowchart illustrating a procedure of ammonia slip suppression processing according to this embodiment;
FIG. 6 is a table illustrating a correspondence relationship between a slip amount and a NOx increment;
FIG. 7 is a table illustrating a correspondence relationship between the NOx increment and an EGR correction amount;
FIG. 8 is a table illustrating a correspondence relationship between the EGR correction amount and a vane opening degree correction amount;
FIG. 9 is a graph illustrating changes in exhaust gas flow rate, turbocharging pressure, and back pressure pertaining to a case where exhaust gas amount-decreasing processing is executed;
FIG. 10 is a table illustrating a correspondence relationship between the vane opening degree correction amount and a fuel correction amount;
FIG. 11 is a flowchart illustrating a part of a procedure of ammonia slip suppression processing according to a modification example of this embodiment;
FIG. 12 is a table illustrating a correspondence relationship between the EGR correction amount and a turbocharging pressure correction amount;
FIG. 13 is a table illustrating a correspondence relationship between the turbocharging pressure correction amount and the fuel correction amount;
FIG. 14 is a table illustrating a correspondence relationship between a slip amount and the EGR correction amount according to the modification example of this embodiment; and
FIG. 15 is a graph illustrating how a map setting a basic vane opening degree according to another modification example of this embodiment sets the basic vane opening degree.

### DETAILED DESCRIPTION OF EMBODIMENTS

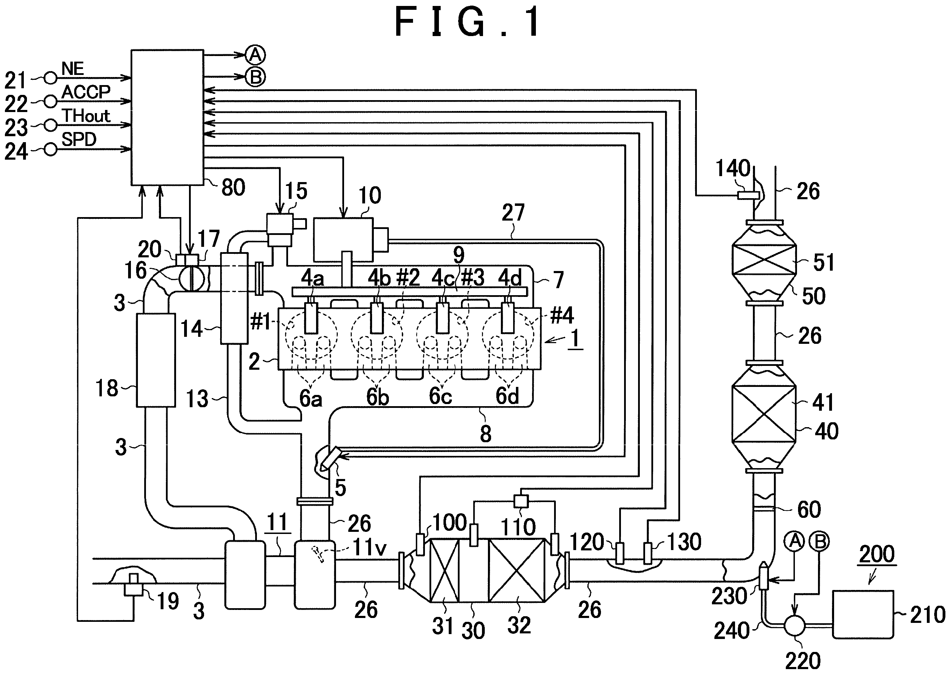

Hereinafter, a specific embodiment of a control device for an internal combustion engine will be described with reference to FIGS. 1 to 10. FIG. 1 illustrates a diesel engine to which the control device according to this embodiment is applied (hereinafter, simply referred to as an "engine") and a peripheral configuration thereof.

A plurality of cylinders #1 to #4 are disposed in an engine 1. A plurality of fuel injection valves 4a to 4d are disposed, in correlation with the respective cylinders #1 to #4, in a cylinder head 2. The fuel injection valves 4a to 4d inject fuel to combustion chambers of the respective cylinders #1 to #4. In the cylinder head 2, an intake port for introducing fresh air into the cylinders and exhaust ports 6a to 6d for discharging combustion gas out of the cylinders are disposed in correlation with the respective cylinders #1 to #4.

The fuel injection valves 4a to 4d are connected to a common rail 9 that accumulates a high-pressure fuel. The common rail 9 is connected to a supply pump 10. The supply pump 10 suctions fuel in a fuel tank and supplies the high-pressure fuel to the common rail 9. The high-pressure fuel that is supplied to the common rail 9 is injected into the cylinders from the fuel injection valves 4a to 4d when the respective fuel injection valves 4a to 4d are open.

An intake manifold 7 is connected to the intake port. The intake manifold 7 is connected to an intake passage 3. An intake throttle valve 16 for adjusting the amount of suctioned air is disposed in the intake passage 3.

An exhaust manifold 8 is connected to the exhaust ports 6a to 6d. The exhaust manifold 8 is connected to an exhaust passage 26. A variable displacement exhaust-driven turbocharger (hereinafter, referred to as a turbocharger) 11 that turbocharges the suctioned air which is introduced to the cylinders by using exhaust pressure is disposed in the middle of the exhaust passage 26. In an exhaust side turbine of the turbocharger 11, a movable nozzle vane 11v that adjusts an exhaust gas flow rate is disposed in the middle of a flow path into which exhaust gas flows. An appropriate actuator that adjusts the opening degree of the nozzle vane 11v is connected to the nozzle vane 11v. The opening degree of the nozzle vane 11v is adjusted to an opening degree in conformity with an engine operation state through driving control of the actuator. In the following description, decreasing the opening degree of the nozzle vane 11v means adjusting the opening degree of the nozzle vane 11v so that the cross-sectional area of a passage of the turbocharger 11 into which the exhaust gas flows decreases. The nozzle vane 11v constitutes an exhaust gas flow rate adjusting mechanism that adjusts the flow rate of the exhaust gas which flows into an SCR catalyst 41 (described later), and the opening degree of the nozzle vane 11v corresponds to an operation amount of the exhaust gas flow rate adjusting mechanism.

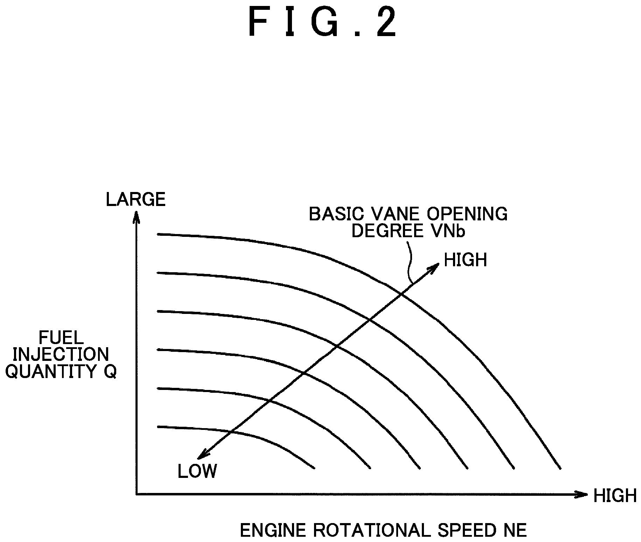

As illustrated in FIG. 2, a basic vane opening degree VNb, which is a base value of the opening degree of the nozzle vane 11v, is set based on fuel injection quantities Q of the respective fuel injection valves 4a to 4d as index values of an engine load and an engine rotational speed NE. More specifically, the basic vane opening degree VNb increases as the fuel injection quantity Q increases and the engine load increases. In addition, the basic vane opening degree VNb increases as the engine rotational speed NE increases. A target vane opening degree VNp is set when the basic vane opening degree VNb is corrected based on various correction values. When the target vane opening degree VNp is set as described above, the opening degree of the nozzle vane 11v is adjusted so that the actual vane opening degree and the target vane opening degree VNp correspond to each other.

Basically, the opening degree of the nozzle vane 11v decreases in a low-load and low-rotation engine operation region. Accordingly, the flow velocity of the exhaust gas that flows into the turbocharger 11 increases and the dynamic pressure of the exhaust gas increases, and thus a sufficient level of turbocharging pressure can be obtained even in the low-load and low-rotation engine operation region. Basically, the opening degree of the nozzle vane 11v increases in a high-load and high-rotation engine operation region. Accordingly, an increase in back pressure attributable to the nozzle vane 11v is suppressed in an engine operation region that has a high exhaust gas flow rate. The "back pressure" according to this embodiment means the pressure inside an exhaust system between the exhaust port of the internal combustion engine and the place where the nozzle vane 11v is disposed.

In the intake passage 3, an intercooler 18 is disposed between an intake side compressor of the turbocharger 11 and the intake throttle valve 16. The intercooler 18 cools the suctioned air after the turbocharger 11 raises the temperature of the suctioned air by turbocharging.

A first purifying member 30 that purifies the exhaust gas is disposed in the middle of the exhaust passage 26 and on the downstream side of the exhaust side turbine of the turbocharger 11. In the first purifying member 30, an oxidation catalyst 31 and a filter 32 are arranged in series with respect to the direction in which the exhaust gas flows.

A catalyst that performs oxidation processing on the HC in the exhaust gas is supported in the oxidation catalyst 31. The filter 32 is a member that collects the particulate matter (PM) in the exhaust gas and is formed of porous ceramic. A catalyst for promoting the oxidation of the PM is supported in the filter 32. The PM in the exhaust gas is collected during passage through a porous wall of the filter 32.

A fuel adding valve 5 for supplying the fuel as an additive to the oxidation catalyst 31 and the filter 32 is disposed in the vicinity of a merging portion of the exhaust manifold 8. The fuel adding valve 5 is connected to the supply pump 10 via a fuel supply pipe 27. The arrangement position of the fuel adding valve 5 can be appropriately changed insofar as the arrangement position of the fuel adding valve 5 is on the upstream side of the first purifying member 30 in the exhaust system.

When the amount of the PM collected in the filter 32 exceeds a predetermined value, regeneration processing for the filter 32 is initiated and the fuel is injected from the fuel adding valve 5 toward the exhaust manifold 8. The fuel that is injected from the fuel adding valve 5 is oxidized after reaching the oxidation catalyst 31. Then, the temperature of the exhaust gas can be raised. When the exhaust gas flows into the filter 32 after the temperature of the exhaust gas is raised by the oxidation catalyst 31, the temperature of the filter 32 is raised. Then, the PM deposited in the filter 32 is subjected to the oxidation processing and the filter 32 can be regenerated.

A second purifying member 40 that purifies the exhaust gas is disposed in the middle of the exhaust passage 26 and on the downstream side of the first purifying member 30. A selective reduction-type NOx catalyst (hereinafter, referred to as an SCR catalyst) 41 as a NOx purification catalyst that reduction-purifies NOx in the exhaust gas by using a reducing agent is arranged in the second purifying member 40.

A third purifying member 50 that purifies the exhaust gas is disposed in the middle of the exhaust passage 26 and on the downstream side of the second purifying member 40. An ammonia oxidation catalyst 51 that purifies the exhaust gas of ammonia is arranged in the third purifying member 50.

A urea water supply mechanism 200 as an adding mechanism that adds urea water, which is a reducing agent containing an ammonia component, to the exhaust gas is disposed in the engine 1. A tank 210 that stores the urea water, a urea adding valve 230 that injection-supplies the urea water into the exhaust passage 26, a supply passage 240 that connects the urea adding valve 230 and the tank 210 to each other, and a pump 220 that is disposed in the middle of the supply passage 240 constitute the urea water supply mechanism 200.

The urea adding valve 230 is disposed in the exhaust passage 26, between the first purifying member 30 and the second purifying member 40, and an injection hole of the urea adding valve 230 is open toward the SCR catalyst 41. When the urea adding valve 230 is open, the urea water is injection-supplied into the exhaust passage 26 via the supply passage 240.

The pump 220 is an electric pump. During a normal rotation, the pump 220 feeds the urea water from the tank 210 toward the urea adding valve 230. During a reverse rotation, the pump 220 feeds the urea water from the urea adding valve 230 toward the tank 210. In other words, the urea water is recovered from the urea adding valve 230 and the supply passage 240 and returns to the tank 210 during the reverse rotation of the pump 220.

In the exhaust passage 26, a dispersion plate 60 is disposed between the urea adding valve 230 and the SCR catalyst 41. The dispersion plate 60 promotes the atomization of the urea water by dispersing the urea water injected from the urea adding valve 230.

The urea water that is added from the urea adding valve 230 is hydrolyzed by the heat of the exhaust gas and becomes ammonia. This ammonia is adsorbed onto the SCR catalyst 41 after reaching the SCR catalyst 41. The exhaust gas is reduction-purified of NOx by the use of the ammonia that is adsorbed on the SCR catalyst 41.

The engine 1 is also provided with an exhaust gas recirculation device (hereinafter, referred to as an EGR device). This EGR device is a device that lowers the combustion temperature in the cylinders by causing some of the exhaust gas to return to the intake passage 3, which allows the amount of the NOx generated from the engine 1 to be reduced. An EGR passage 13 that allows the intake passage 3 and the exhaust manifold 8 to communicate with each other, an EGR valve 15 that is disposed in the EGR passage 13, an EGR cooler 14 that is disposed in the middle of the EGR passage 13, and the like constitute this EGR device. When the opening degree of the EGR valve 15 is adjusted in accordance with the engine operation state, an EGR amount as the amount of the exhaust gas that returns from the exhaust passage 26 to the intake passage 3 is adjusted. The temperature of the exhaust gas that flows through the EGR passage 13 is lowered by the EGR cooler 14.

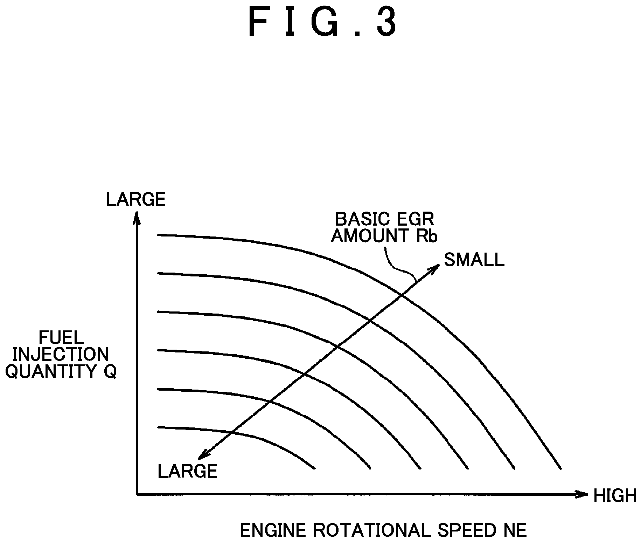

As illustrated in FIG. 3, a basic EGR amount Rb, which is a base value of the EGR amount, is set based on fuel injection quantity Q as the index value of the engine load and the engine rotational speed NE. More specifically, the basic EGR amount Rb decreases as the fuel injection quantity Q increases and the engine load increases. In addition, the basic EGR amount Rb decreases as the engine rotational speed NE increases. A target EGR amount Rp is set when the basic EGR amount Rb is corrected based on various correction values. When the target EGR amount Rp is set as described above, the opening degree of the EGR valve 15 is adjusted so that the actual EGR amount and the target EGR amount Rp correspond to each other.

Basically, in the high-load and high-rotation engine operation region, it is ensured that a sufficient amount of the fresh air is introduced into the cylinders based on a decrease in the EGR amount. Basically, in the low-rotation and low-load engine operation region, the effect of NOx reduction based on exhaust gas recirculation can be maximized by an increase in the EGR amount.

Various sensors are attached to the engine 1 so as to detect engine operation states. For example, an air flow meter 19 detects the amount of the suctioned air GA, a throttle valve opening degree sensor 20 detects the opening degree of the intake throttle valve 16, a crank angle sensor 21 detects the engine rotational speed NE, an accelerator sensor 22 detects an accelerator pedal depression amount, that is, an accelerator operation amount ACCP, an outside air temperature sensor 23 detects an outside air temperature THout, and a vehicle speed sensor 24 detects the vehicle speed SPD of the vehicle in which the engine 1 is mounted.

A first exhaust gas temperature sensor 100, which is disposed on the upstream side of the oxidation catalyst 31, detects a first exhaust gas temperature TH1 that is the temperature of the exhaust gas prior to the inflow into the oxidation catalyst 31. A differential pressure sensor 110 detects the pressure difference ΔP between the exhaust pressures on the upstream and downstream sides of the filter 32.

In the exhaust passage 26, a second exhaust gas temperature sensor 120 and a first NOx sensor 130 are disposed between the first purifying member 30 and the second purifying member 40 and on the upstream side of the urea adding valve 230. The second exhaust gas temperature sensor 120 detects a second exhaust gas temperature TH2 that is the temperature of the exhaust gas prior to the inflow into the SCR catalyst 41. The second exhaust gas temperature TH2 is more suitable than the first exhaust gas temperature TH1 as a temperature that has a correlation with the temperature of the SCR catalyst 41. The first NOx sensor 130 detects a first NOx concentration N1 that is the NOx concentration of the exhaust gas prior to the inflow into the SCR catalyst 41.

In the exhaust passage 26, a second NOx sensor 140 is disposed on the downstream side of the third purifying member 50. The second NOx sensor 140 detects a second NOx concentration N2 that is the NOx concentration of the exhaust gas purified by the SCR catalyst 41.

Outputs of these various sensors or the like are input to an electronic control unit 80. The main component of this electronic control unit 80 is a microcomputer that is provided with, for example, a central processing unit (CPU), a read-only memory (ROM) where various programs, maps, and the like are stored in advance, a random access memory (RAM) that temporarily stores calculation results of the CPU and the like, a timer counter, an input interface, and an output interface.

Various types of control for the engine 1 are performed by the electronic control unit 80. Examples thereof include fuel injection quantity control and fuel injection timing control regarding the fuel injection valves 4a to 4d and the fuel adding valve 5, discharge pressure control regarding the supply pump 10, drive amount control regarding an actuator 17 that opens or closes the intake throttle valve 16, opening degree control regarding the EGR valve 15, and control regarding the opening degree of the nozzle vane 11v.

The electronic control unit 80 also performs various types of exhaust gas purification control such as the regeneration processing for the combustion of the PM collected by the filter 32. The electronic control unit 80 controls the urea water addition by the urea adding valve 230 as an example of exhaust gas purification control. In this addition control, a urea addition amount QE that is required for the reduction processing of the NOx discharged from the engine 1 is calculated based on the engine operation state and the like. Then, the open state of the urea adding valve 230 is controlled so that the amount of the urea water that corresponds to the calculated urea addition amount QE is injected from the urea adding valve 230. A target amount of the ammonia that is adsorbed onto the SCR catalyst 41 is also set in this addition control. Then, the urea addition amount QE is corrected so that the amount of the ammonia that is adsorbed on the SCR catalyst 41 and the target amount correspond to each other. The amount of the ammonia that is adsorbed on the SCR catalyst 41 can be estimated in an appropriate manner. For example, the ammonia adsorption amount can be estimated based on various parameters that have a correlation with the ammonia adsorption amount such as a urea water addition amount, the exhaust gas temperature, and the exhaust gas flow rate.

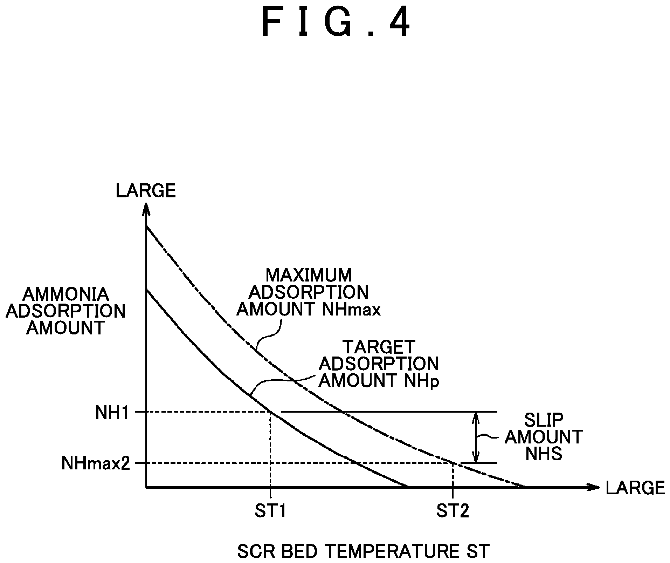

An SCR bed temperature ST, which is the temperature of the SCR catalyst 41, increases as the exhaust gas temperature increases. As the SCR bed temperature ST increases, a maximum adsorption amount NHmax, which is the maximum amount of the ammonia that can be adsorbed onto the SCR catalyst 41, decreases as illustrated in FIG. 4. When the amount of the ammonia that is adsorbed on the SCR catalyst 41 exceeds the maximum adsorption amount NHmax, the ammonia that is equivalent in amount to the excess is desorbed from the SCR catalyst 41. Then, a so-called ammonia slip occurs.

A target adsorption amount NHp of the SCR catalyst 41 regarding the ammonia is set in the urea water addition control described above. The target adsorption amount NHp is variably set to decrease as the exhaust gas temperature increases and is set to an amount that is a predetermined amount smaller than the maximum adsorption amount NHmax so that the occurrence of the ammonia slip is suppressed.

As illustrated in FIG. 4, the amount of the ammonia that is maintained in the SCR catalyst 41 is a predetermined adsorption amount NH1 in a case where the SCR bed temperature ST is a certain temperature ST1 and the target adsorption amount NHp correlated with the temperature ST1 is the adsorption amount NH1. When the exhaust gas temperature significantly increases in this state due to the acceleration of the vehicle or the like, the SCR bed temperature ST reaches a temperature ST2 that is higher than the temperature ST1. In a case where the maximum adsorption amount NHmax that is correlated with this temperature ST2 (NHmax2 illustrated in FIG. 4) is smaller than the adsorption amount NH1, the ammonia that is equivalent in amount to the difference between the adsorption amount NH1 and the maximum adsorption amount NHmax2 is desorbed from the SCR catalyst 41 and the ammonia slip occurs. In this case, a slip amount NHS of the ammonia is substantially equal to the amount that is obtained by subtracting the maximum adsorption amount NHmax2 from the adsorption amount NH1, that is, the amount that is obtained by subtracting the maximum ammonia adsorption amount from the amount of the ammonia adsorbed on the SCR catalyst 41.

As described above, the ammonia slip is likely to occur, even when the target adsorption amount NHp regarding the ammonia is appropriately set, in a case where the exhaust gas temperature significantly changes to a high temperature side. In this regard, the electronic control unit 80 according to this embodiment executes EGR amount-decreasing processing for increasing the amount of the NOx that is generated in the combustion chamber of the engine 1 by decreasing the EGR amount which is subjected to the return to the intake passage 3 and suppressing the occurrence of the ammonia slip by causing a reaction between the increased NOx and the ammonia which is desorbed from the SCR catalyst 41.

The exhaust gas flow rate increases when the EGR amount decreases, and thus the length of time required for the exhaust gas to pass through the SCR catalyst 41 (length of time for the exhaust gas to come out of the SCR catalyst 41 after moving into the SCR catalyst 41) decreases. Accordingly, the length of time of the NOx-ammonia reaction in the SCR catalyst 41 decreases, and thus a state could arise where the reaction between the increased amount of the NOx and the ammonia desorbed from the SCR catalyst 41 is not in time, which still could result in the ammonia slip.

In this embodiment, exhaust gas amount-decreasing processing and ammonia slip suppression processing are performed at the same time so that an increase in the exhaust gas flow rate attributable to the EGR amount-decreasing processing is suppressed.

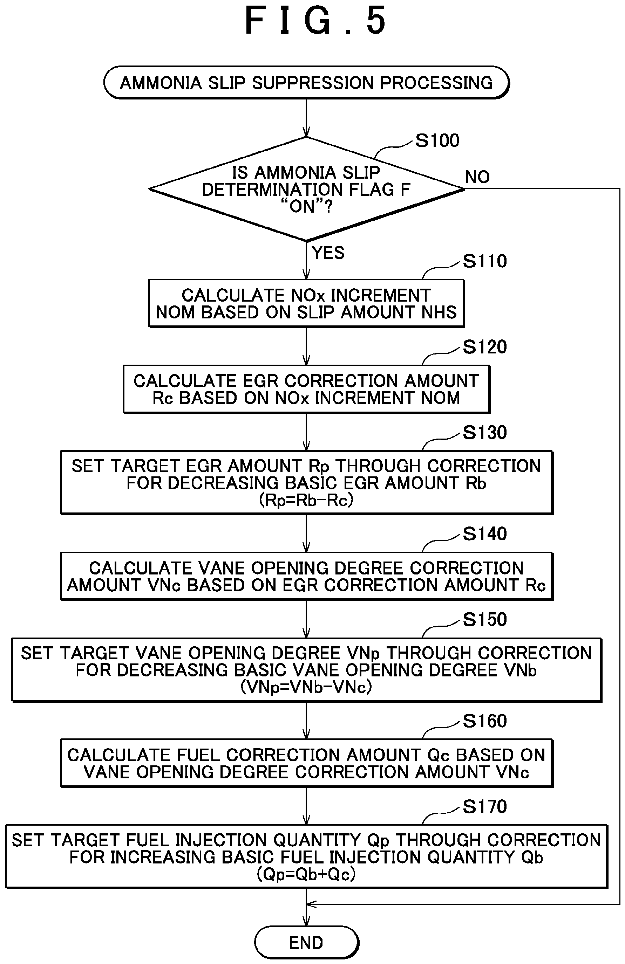

FIG. 5 illustrates a procedure of the ammonia slip suppression processing according to this embodiment. This ammonia slip suppression processing is repeatedly executed at predetermined intervals by the electronic control unit 80.

After this processing is initiated, it is first determined whether or not an ammonia slip determination flag F is "ON" (S100). The ammonia slip determination flag F is a flag that is set "ON" when an ammonia slip occurrence condition with regard to the SCR catalyst 41 is satisfied. The ammonia slip determination flag F has "OFF" as its initial value. In this embodiment, the condition that the slip amount NHS of the ammonia desorbed from the SCR catalyst 41 is equal to or higher than a predetermined threshold α is set as the ammonia slip occurrence condition. The minimum value of the slip amount NHS that cannot be practically allowed is set as the threshold α. When the slip amount NHS becomes equal to or higher than the threshold α, the ammonia slip determination flag F is set "ON". When the slip amount NHS becomes equal to or lower than a threshold β that is sufficiently lower than the threshold α, the ammonia slip determination flag F is switched from "ON" to "OFF". Whether or not the slip amount NHS is equal to or lower than the threshold β can be determined by a sequential calculation of the slip amount NHS decreasing based on the execution of the EGR amount-decreasing processing and a comparison between the calculated slip amount NHS and the threshold β. The slip amount NHS can be considered to become equal to or lower than the threshold β at a point in time when the time of execution of the EGR amount-decreasing processing reaches a predetermined time.

As described above, the slip amount NHS is calculated by the maximum adsorption amount NHmax regarding the ammonia that is set based on the exhaust gas temperature being subtracted from the amount of the ammonia that is adsorbed on the SCR catalyst 41. An estimated value of the amount of the ammonia that is adsorbed on the SCR catalyst 41 is calculated based on the urea water addition amount, the second exhaust gas temperature TH2, and the exhaust gas flow rate. The maximum adsorption amount NHmax is set based on the second exhaust gas temperature TH2 so that the maximum adsorption amount NHmax is an amount that decreases as the second exhaust gas temperature TH2 increases. The processing for calculating the slip amount NHS and the processing for setting the value of the ammonia slip determination flag F based on the comparison between the calculated slip amount NHS and the threshold α are repeatedly executed at predetermined intervals by the electronic control unit 80 as processing other than this processing.

This processing is temporarily terminated when it is determined in Step S100 that the ammonia slip determination flag F is not "ON" (S100: NO). In a case where it is determined in Step S100 that the ammonia slip determination flag F is "ON" (S100: YES), the EGR amount-decreasing processing is executed by the processing of Step S110, Step S120, and Step S130 being performed.

In Step S110, a NOx increment NOM is calculated based on the current slip amount NHS. The NOx increment NOM is the amount of the NOx that is required to purify the exhaust gas of the ammonia desorbed from the SCR catalyst 41.

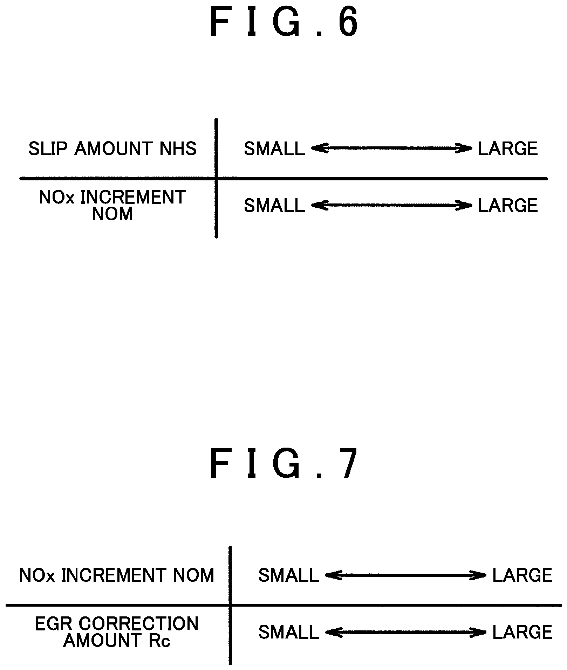

As illustrated in FIG. 6, the NOx increment NOM is set to increase as the slip amount NHS of the ammonia increases. This setting is because the amount of the NOx that is required to purify the exhaust gas of the ammonia desorbed from the SCR catalyst 41 increases as the slip amount NHS of the ammonia increases.

Then, in Step S120, an EGR correction amount Rc is calculated based on the NOx increment NOM. The EGR correction amount Rc is an EGR amount decrement that is required to increase the amount of the NOx generated in the cylinder by the NOx increment NOM and is a correction value of the basic EGR amount Rb.

As illustrated in FIG. 7, the EGR correction amount Rc is set to increase as the NOx increment NOM increases. This setting is because the amount of the NOx that is generated in the combustion chamber increases as the EGR amount decreases, that is, as the EGR amount decrement increases.

Then, in Step S130, the target EGR amount Rp is set based on an amount-decreasing correction of the current basic EGR amount Rb using the EGR correction amount Rc. In Step S130, the value that is obtained by subtracting the EGR correction amount Rc from the basic EGR amount Rb is set as the target EGR amount Rp. In a case where various correction amounts other than the EGR correction amount Rc are additionally calculated with regard to the EGR amount, a correction using the various correction amounts is also simultaneously performed during the setting of the target EGR amount Rp.

The setting of the target EGR amount Rp as described above allows the EGR amount subjected to the return to the intake passage 3 to be decreased by the EGR correction amount Rc in comparison to a case where the EGR amount-decreasing processing is not executed. Then, the exhaust gas amount-decreasing processing described above is executed by the processing of Step S140 and Step S150 being performed.

In Step S140, a vane opening degree correction amount VNc is calculated based on the EGR correction amount Rc that is calculated in Step S120. The vane opening degree correction amount VNc is a correction value that is used to decrease the basic vane opening degree VNb so that an increase in the exhaust gas flow rate attributable to the EGR amount-decreasing processing is suppressed.

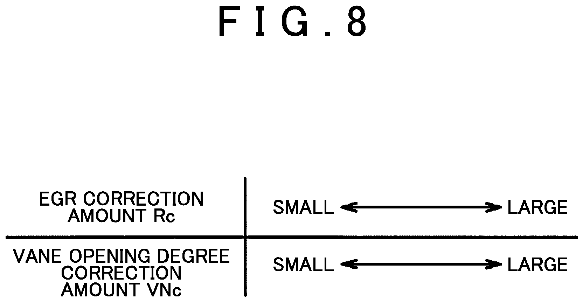

As illustrated in FIG. 8, the vane opening degree correction amount VNc is set to increase as the EGR correction amount Rc increases. A reason for this setting is as follows. Since the flow rate of the exhaust gas that flows into the SCR catalyst 41 increases as the EGR correction amount Rc increases and the EGR amount decrement increases, an exhaust gas flow rate decrement needs to be increased by the opening degree of the nozzle vane 11v being decreased as the EGR correction amount Rc increases in order to suppress the increase in the exhaust gas flow rate.

Then, in Step S150, the target vane opening degree VNp is set based on a decrease correction of the current basic vane opening degree VNb using the vane opening degree correction amount VNc. In Step S150, the value that is obtained by subtracting the vane opening degree correction amount VNc from the basic vane opening degree VNb is set as the target vane opening degree VNp. In a case where various correction amounts other than the vane opening degree correction amount VNc are additionally calculated with regard to the vane opening degree, a correction using the various correction amounts is also simultaneously performed during the setting of the target vane opening degree VNp.

The setting of the target vane opening degree VNp as described above allows the actual vane opening degree to be decreased by the vane opening degree correction amount VNc in comparison to a case where the exhaust gas amount-decreasing processing is not executed. Accordingly, the flow rate of the exhaust gas that flows into the SCR catalyst 41 is decreased by the vane opening degree correction amount VNc in comparison to a case where the exhaust gas amount-decreasing processing is not executed.

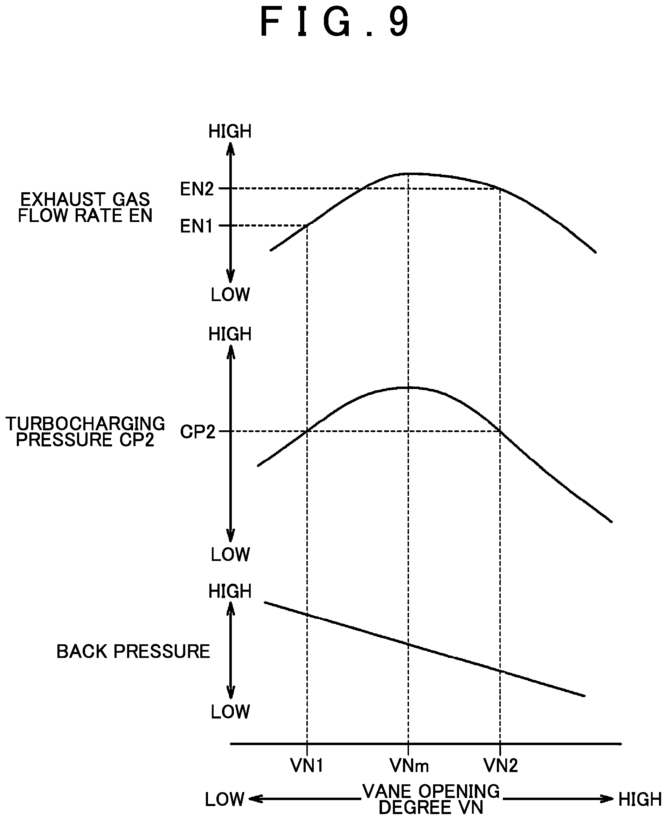

FIG. 9 illustrates changes in the exhaust gas flow rate, the turbocharging pressure, and the back pressure during a change in the opening degree of the nozzle vane 11v. The vane opening degree VN1 that is illustrated in FIG. 9, and is the opening degree of the nozzle vane 11v during the execution of the exhaust gas amount-decreasing processing, will be referred to as a post-correction vane opening degree VN1 in the following description. The vane opening degree VN2 that is illustrated in FIG. 9, and is the opening degree of the nozzle vane 11v during the non-execution of the exhaust gas amount-decreasing processing, will be referred to as a pre-correction vane opening degree VN2 in the following description. Accordingly, the post-correction vane opening degree VN1 is an opening degree that is lower than the pre-correction vane opening degree VN2 by the vane opening degree correction amount VNc. A turbocharging pressure CP pertaining to a case where the opening degree of the nozzle vane 11v is the pre-correction vane opening degree VN2 will be referred to as a turbocharging pressure CP2. An exhaust gas flow rate EN pertaining to a case where the opening degree of the nozzle vane 11v is the vane opening degree VN2 will be referred to as an exhaust gas flow rate EN2.

In a fixed engine operation state, the back pressure is reduced as the vane opening degree VN increases as illustrated in FIG. 9. Although the turbocharging pressure CP increases as the vane opening degree VN increases, the increase in the turbocharging pressure CP has a peak, and the turbocharging pressure CP tends to be reduced as the vane opening degree VN increases after a peak value is reached. Although the exhaust gas flow rate EN increases as the vane opening degree VN increases, the increase in the exhaust gas flow rate EN has a peak, and the exhaust gas flow rate EN tends to be reduced as the vane opening degree VN increases after a peak value is reached. The vane opening degree at which the exhaust gas flow rate EN reaches the peak value and the vane opening degree at which the turbocharging pressure CP reaches the peak value are substantially equal to each other. In the following description, the vane opening degree at which the exhaust gas flow rate EN and the turbocharging pressure CP reach the peak values will be referred to as a peak opening degree VNm. An engine output is reduced as the back pressure increases when the vane opening degree VN is lower than the peak opening degree VNm. Accordingly, the vane opening degree VN that is usually set is an opening degree in a region equal to or higher than the peak opening degree VNm.

When the opening degree of the nozzle vane 11v is changed to the post-correction vane opening degree VN1 that is lower than the pre-correction vane opening degree VN2 through the exhaust gas amount-decreasing processing, this decrease in the vane opening degree VN causes the exhaust gas flow rate EN to decrease to an exhaust gas flow rate EN1 that is lower than the exhaust gas flow rate EN2. An increase in the exhaust gas flow rate EN that results from the execution of the EGR amount-decreasing processing is offset by this decrease in the exhaust gas flow rate EN that is attributable to the change in the vane opening degree VN.

Usually, the pre-correction vane opening degree VN2 is set to an opening degree that is equal to or higher than the peak opening degree VNm. Accordingly, the exhaust gas flow rate EN decreases even when the vane opening degree VN is corrected to be increased. In a case where the exhaust gas flow rate EN is decreased through this correction for increasing the vane opening degree VN, the vane opening degree VN is increased in the region that is equal to or higher than the peak opening degree VNm, and thus an opening degree region in which the turbocharging pressure CP changes only in a direction of reduction as a result of an increase in the vane opening degree VN is used. Accordingly, when the vane opening degree VN is corrected, the turbocharging pressure CP after a correction of the vane opening degree VN is lower than the turbocharging pressure CP prior to the correction.

In this embodiment, the exhaust gas flow rate EN is decreased by the vane opening degree VN being corrected to be decreased. In particular, the vane opening degree correction amount VNc that is calculated in Step S140 is set to be an opening degree in an opening degree region in which the post-correction vane opening degree VN1 is lower than the peak opening degree VNm. Accordingly, the post-correction vane opening degree VN1 is an opening degree in an opening degree region in which the turbocharging pressure CP is reduced after a temporary increase as a result of a decrease in the vane opening degree VN. Accordingly, a reduction in the turbocharging pressure CP after a correction of the vane opening degree VN can be suppressed in comparison to a case where the opening degree region in which the turbocharging pressure CP changes only in the direction of reduction as a result of the correction for increasing in the vane opening degree VN is used.

Processing for a fuel injection quantity-increasing correction is executed by the processing of Step S160 and Step S170 being executed thereafter. In Step S160, a fuel correction amount Qc is calculated based on the vane opening degree correction amount VNc that is calculated in Step S140. The fuel correction amount Qc is a correction value that is used to correct a basic fuel injection quantity Qb for the engine 1 to be increased. The basic fuel injection quantity Qb for the engine 1 is set based on the engine operation states such as the engine rotational speed NE and the accelerator operation amount ACCP.

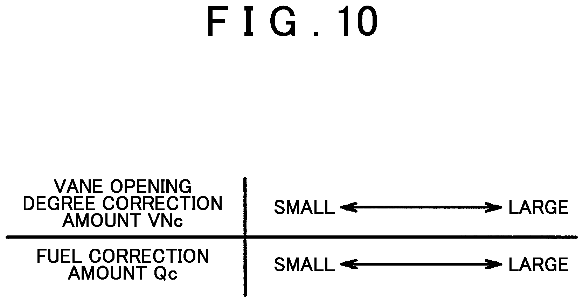

As illustrated in FIG. 10, the fuel correction amount Qc is set to increase as the vane opening degree correction amount VNc increases. A reason for this setting is as follows. As described above, the back pressure increases during the execution of the exhaust gas amount-decreasing processing for decreasing the exhaust gas flow rate based on a decrease in the opening degree of the nozzle vane 11v. Accordingly, escape of the exhaust gas from the combustion chamber or the like may deteriorate and output torque of the engine 1 may be reduced. The amount of reduction in the output torque that is attributable to the increase in the back pressure increases as a vane opening degree decrement increases. In this regard, the processing for the fuel injection quantity-increasing correction is executed so that the reduction in the output torque is suppressed. In a case where this fuel injection quantity-increasing correction is performed, an optimal amount of amount-increasing correction commensurate with the amount of reduction in the output torque attributable to the increase in the back pressure can be set by a correction amount for a correction for increasing the fuel injection quantity being increased as the vane opening degree decrement attributable to the exhaust gas amount-decreasing processing increases. Accordingly, in Step S160, the fuel correction amount Qc is set to increase as the vane opening degree correction amount VNc increases and the vane opening degree decrement attributable to the exhaust gas amount-decreasing processing increases.

Then, in Step S170, a target fuel injection quantity Qp is set based on a quantity-increasing correction of the current basic fuel injection quantity Qb using the fuel correction amount Qc. In Step S170, the value that is obtained by adding the fuel correction amount Qc to the basic fuel injection quantity Qb is set as the target fuel injection quantity Qp. In a case where various correction amounts other than the fuel correction amount Qc are additionally calculated with regard to the fuel injection quantity, a correction using the various correction amounts is also simultaneously performed during the setting of the target fuel injection quantity Qp. Because of the setting of the target fuel injection quantity Qp as described above, the amount of the fuel that is supplied to the engine 1 is increased by the fuel correction amount Qc in comparison to a case where the processing for the fuel injection quantity-increasing correction is not executed. Accordingly, the output torque of the engine 1 is increased by the fuel correction amount Qc.

This processing is temporarily terminated after the processing of Step S170 is performed. This embodiment described above can achieve the following effects. (1) When it is determined in Step S100 illustrated in FIG. 5 that the ammonia slip occurrence condition with regard to the SCR catalyst 41 is satisfied, the EGR amount-decreasing processing is executed through each of the processing of Step S110 to Step S130. The amount of the NOx that is generated in the engine 1 is increased by the execution of the EGR amount-decreasing processing, and the amount of the ammonia that is desorbed from the SCR catalyst 41 is decreased by the reaction with the increased amount of the NOx.

During the execution of the EGR amount-decreasing processing, the exhaust gas flow rate is lower than during the non-execution of the EGR amount-decreasing processing since the exhaust gas amount-decreasing processing is executed through each of the processing of Step S140 and Step S150 illustrated in FIG. 5. An increase in the exhaust gas flow rate resulting from the execution of the EGR amount-decreasing processing is suppressed by the execution of the exhaust gas amount-decreasing processing. Accordingly, the shortening of the length of time in which the exhaust gas passes through the SCR catalyst 41 that is attributable to the execution of the EGR amount-decreasing processing can be suppressed. Accordingly, a sufficient length of time in which the NOx and the ammonia react with each other in the SCR catalyst 41 is ensured, and thus the exhaust gas is appropriately purified of the ammonia that is desorbed from the SCR catalyst 41. Accordingly, the suppression of the ammonia slip through a decrease in the EGR amount can be appropriately performed.
(2) In Step S140 illustrated in FIG. 5, the vane opening degree correction amount VNc is set to be a value that increases as the EGR correction amount Rc increases and the EGR amount decrement attributable to the EGR amount-decreasing processing increases. Accordingly, the exhaust gas flow rate decrement that is attributable to the exhaust gas amount-decreasing processing increases as the EGR amount decrement increases and an increase in the exhaust gas flow rate increases as a result of the execution of the EGR amount-decreasing processing, and thus an increase in the exhaust gas flow rate that is attributable to the execution of the EGR amount-decreasing processing can be appropriately suppressed.
(3) The engine 1 is provided with the turbocharger 11 to which the nozzle vane 11v is attached. The nozzle vane 11v is used as the exhaust gas flow rate adjusting mechanism that adjusts the flow rate of the exhaust gas which flows into the SCR catalyst 41, and a decrease in the exhaust gas flow rate based on the exhaust gas amount-decreasing processing is performed by the opening degree of the nozzle vane 11v being decreased. Accordingly, the exhaust gas flow rate can be decreased without an additional exhaust gas flow rate adjusting mechanism being disposed.
(4) In a case where the exhaust gas amount-decreasing processing for decreasing the exhaust gas flow rate based on a decrease in the opening degree of the nozzle vane 11v is executed, the fuel injection quantity-increasing correction is executed along with the exhaust gas amount-decreasing processing by the processing of Step S160 and Step S170 illustrated in FIG. 5 being performed. Accordingly, a reduction in the output torque that is attributable to an increase in the back pressure which results from the execution of the exhaust gas amount-decreasing processing can be suppressed by the fuel injection quantity-increasing correction.
(5) In a case where the exhaust gas amount-decreasing processing for decreasing the exhaust gas flow rate based on a decrease in the opening degree of the nozzle vane 11v is executed, the amount of reduction of the output torque that is attributable to an increase in the back pressure increases as the vane opening degree decrement increases. When the fuel injection quantity-increasing correction described above is performed, the fuel correction amount Qc is set, in Step S160 illustrated in FIG. 5, to increase as the vane opening degree correction amount VNc increases. Accordingly, the amount of a correction for increasing the fuel injection quantity that is commensurate with the amount of reduction in the output torque attributable to the increase in the back pressure can be set by the correction amount for the correction for increasing the fuel injection quantity being increased as the vane opening degree decrement attributable to the exhaust gas amount-decreasing processing increases. Accordingly, a reduction in the output torque that is attributable to an increase in the back pressure can be appropriately suppressed even in a case where the vane opening degree decrement regarding the nozzle vane 11v varies due to a difference in the EGR correction amount Rc or the like.
(6) The condition that the slip amount NHS of the ammonia desorbed from the SCR catalyst 41 is equal to or higher than the threshold α is set as the ammonia slip occurrence condition. Accordingly, an appropriate determination can be made as to the presence or absence of a state where the ammonia slip occurs. As a result, an appropriate determination can be made as to the presence or absence of a state where the execution of the EGR amount-decreasing processing and the exhaust gas amount-decreasing processing is required.

The embodiment described above can be modified as follows. In the engine 1 to which the turbocharger 11 is attached, a target value of the turbocharging pressure is set in many cases. A target turbocharging pressure CPp is calculated based on a correction of a basic turbocharging pressure CPb using respective correction values. The basic turbocharging pressure CPb is set based on the engine operation states such as the engine rotational speed and the engine load. The opening degree of the nozzle vane 11v decreases as a result of a reduction in the target turbocharging pressure CPp so that the actual turbocharging pressure is reduced as the target turbocharging pressure CPp is reduced. Accordingly, although the vane opening degree correction amount VNc is set based on the EGR correction amount Rc in the embodiment described above, an increase in the exhaust gas flow rate that is attributable to the EGR amount-decreasing processing can also be suppressed even when a value for correcting the basic turbocharging pressure CPb is set so that the target turbocharging pressure CPp is reduced as the EGR correction amount Rc increases.

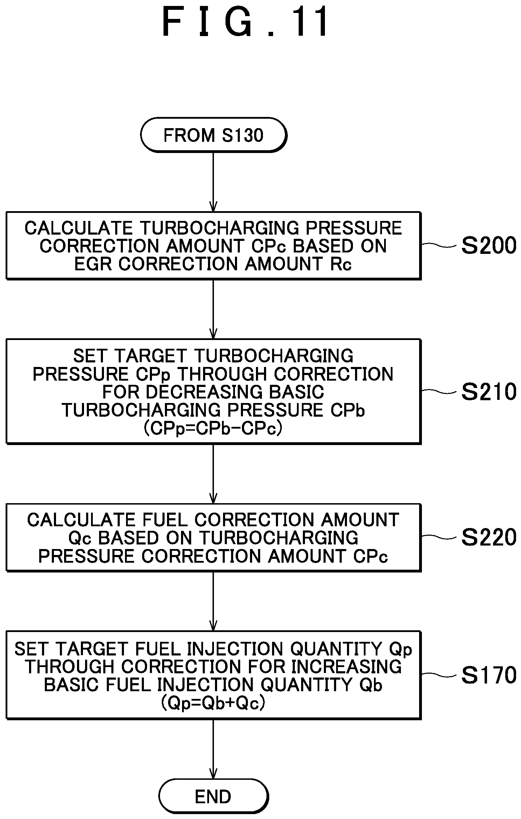

This modification example can be realized based on a partial change in the series of processing procedure that is illustrated in FIG. 5. In the ammonia slip suppression processing according to this modification example, the exhaust gas amount-decreasing processing is executed by the processing of Step S130 illustrated in FIG. 5 being executed and then the processing of Step S200 and Step S210 being performed as illustrated in FIG. 11.

In Step S200, a turbocharging pressure correction amount CPc is calculated based on the EGR correction amount Rc that is calculated in Step S120 in FIG. 5. The turbocharging pressure correction amount CPc is a correction value for decreasing the basic turbocharging pressure CPb so that an increase in the exhaust gas flow rate attributable to the execution of the EGR amount-decreasing processing is suppressed.

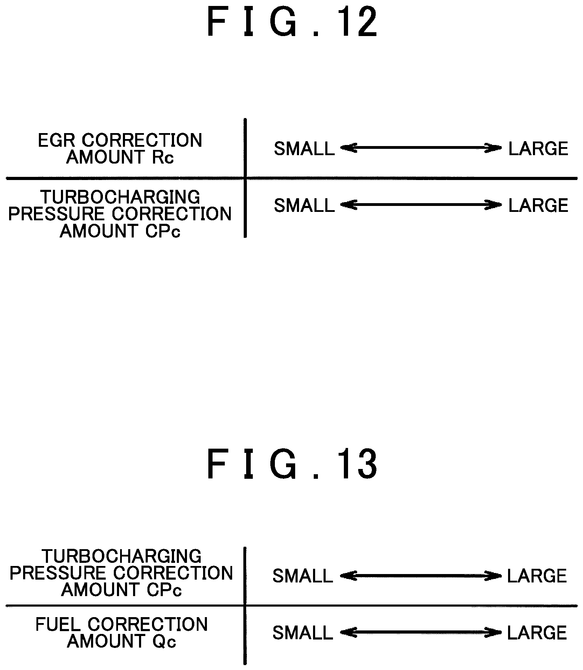

As illustrated in FIG. 12, the turbocharging pressure correction amount CPc is set to a value that increases as the EGR correction amount Rc increases. A reason for this setting is as follows. The flow rate of the exhaust gas that flows into the SCR catalyst 41 increases as the EGR correction amount Rc increases and the EGR amount decrement increases. Accordingly, in order to suppress the increase in the exhaust gas flow rate, the exhaust gas flow rate decrement needs to be increased by the target turbocharging pressure CPp being corrected to be reduced as the EGR correction amount Rc increases and the opening degree of the nozzle vane 11v being decreased.

Then, in Step S210, the target turbocharging pressure CPp is set based on a correction for decreasing the current basic turbocharging pressure CPb by the use of the turbocharging pressure correction amount CPc. In Step S210, the value that is obtained by subtracting the turbocharging pressure correction amount CPc from the basic turbocharging pressure CPb is set as the target turbocharging pressure CPp. After the target turbocharging pressure CPp is set as described above, the opening degree of the nozzle vane 11v is decreased so that the actual turbocharging pressure is reduced by the turbocharging pressure correction amount CPc. In other words, the vane opening degree of the nozzle vane 11v is decreased by an amount commensurate with the turbocharging pressure correction amount CPc in comparison to a case where the exhaust gas amount-decreasing processing is not executed. Accordingly, the flow rate of the exhaust gas that flows into the SCR catalyst 41 is lower than in a case where the exhaust gas amount-decreasing processing is not executed.

The processing for the fuel injection quantity-increasing correction is executed by the processing of Step S220 and Step S170 illustrated in FIG. 5 being performed thereafter. In Step S220, the fuel correction amount Qc is calculated based on the turbocharging pressure correction amount CPc that is calculated in Step S200. The fuel correction amount Qc is also a correction value for increasing the basic fuel injection quantity Qb for the engine 1 that is set based on the engine operation states.

As illustrated in FIG. 13, the fuel correction amount Qc is set to increase as the turbocharging pressure correction amount CPc increases. A reason for this setting is as follows. As described above, the back pressure increases during the execution of the exhaust gas amount-decreasing processing for decreasing the exhaust gas flow rate based on a decrease in the opening degree of the nozzle vane 11v, and thus the output torque of the engine 1 might be reduced. The amount of reduction in the output torque that is attributable to the increase in the back pressure increases as the vane opening degree decrement increases. In this regard, the processing for the fuel injection quantity-increasing correction is also executed in this modification example so that the reduction in the output torque is suppressed. In a case where this fuel injection quantity-increasing correction is performed, an optimal amount of amount-increasing correction commensurate with the amount of reduction in the output torque attributable to the increase in the back pressure can be set by the correction amount for the correction for increasing the fuel injection quantity being increased as the turbocharging pressure correction amount CPc increases and the amount of reduction in the target turbocharging pressure CPp increases, that is, as the vane opening degree decrement attributable to the exhaust gas amount-decreasing processing increases. Accordingly, in Step S220, the fuel correction amount Qc is set to increase as the turbocharging pressure correction amount CPc increases and the vane opening degree decrement attributable to the exhaust gas amount-decreasing processing increases.

Then, in Step S170, the target fuel injection quantity Qp is set based on a quantity-increasing correction of the current basic fuel injection quantity Qb using the fuel correction amount Qc. In Step S170, the value that is obtained by adding the fuel correction amount Qc to the basic fuel injection quantity Qb is set as the target fuel injection quantity Qp. Even in this modification example, a correction using various correction amounts is also simultaneously performed during the setting of the target fuel injection quantity Qp in a case where the various correction amounts other than the fuel correction amount Qc are additionally calculated with regard to the fuel injection quantity. Because of the setting of the target fuel injection quantity Qp as described above, the amount of the fuel that is supplied to the engine 1 is increased by the fuel correction amount Qc in comparison to a case where the processing for the fuel injection quantity-increasing correction is not executed. Accordingly, the output torque of the engine 1 is increased by the fuel correction amount Qc. This processing is temporarily terminated after the processing of Step S170 is performed.

Even in this modification example, the exhaust gas flow rate is lower during the execution of the EGR amount-decreasing processing than during the non-execution of the EGR amount-decreasing processing, and thus the suppression of the ammonia slip through a decrease in the EGR amount can be appropriately performed as in the embodiment described above. In a case where the exhaust gas amount-decreasing processing for decreasing the exhaust gas flow rate based on a decrease in the opening degree of the nozzle vane 11v is executed, the fuel injection quantity-increasing correction is executed along with the exhaust gas amount-decreasing processing. Accordingly, as in the embodiment described above, a reduction in the output torque that is attributable to an increase in the back pressure which results from the execution of the exhaust gas amount-decreasing processing can be suppressed by the fuel injection quantity-increasing correction.

In the embodiment and the modification example described above, the fuel injection quantity-increasing correction is performed so that a reduction in the output torque that is attributable to an increase in the back pressure which results from the execution of the exhaust gas amount-decreasing processing is suppressed. However, the fuel injection quantity-increasing correction may not be performed. The effects of (1) to (3) described above can be achieved even in this case.

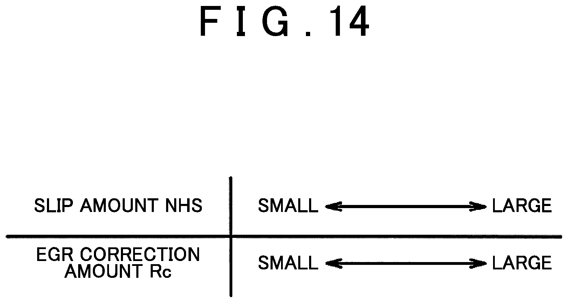

In the embodiment described above, the NOx increment NOM is calculated based on the slip amount NHS and the EGR correction amount Rc is calculated based on the NOx increment NOM. Instead, however, the EGR correction amount Rc may be directly set based on the slip amount NHS as illustrated in FIG. 14 so that the EGR correction amount Rc increases as the slip amount NHS of the ammonia increases. Even in this case, the EGR amount decrement increases as the slip amount NHS of the ammonia increases and the amount of the NOx required to purify the exhaust gas of the ammonia desorbed from the SCR catalyst 41 increases. Accordingly, a required amount of the NOx can be ensured as in the embodiment described above.

In the embodiment described above, the NOx increment NOM is calculated based on the slip amount NHS, the EGR correction amount Rc is calculated based on the NOx increment NOM, the vane opening degree correction amount VNc is calculated based on the EGR correction amount Rc, and an increase in the exhaust gas flow rate attributable to the execution of the EGR amount-decreasing processing is suppressed through a correction of the basic vane opening degree VNb using the vane opening degree correction amount VNc. However, an increase in the exhaust gas flow rate attributable to the execution of the EGR amount-decreasing processing may be suppressed in another manner.

For example, a first map and a second map, which are maps for setting the basic vane opening degree VNb based on the engine operation states such as the engine rotational speed NE and the fuel injection quantity Q and for setting different basic vane opening degrees VNb in the same engine operation state, are prepared.

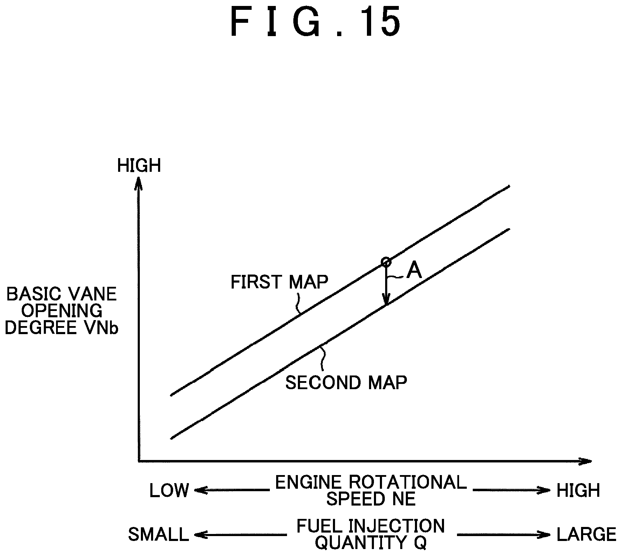

As illustrated in FIG. 15, the first map is, for example, a map for setting the basic vane opening degree VNb in the manner of setting that is illustrated in FIG. 2. A set value of the second map, in the meantime, is determined so that the basic vane opening degree VNb that is set based on the second map is lower than the basic vane opening degree VNb that is set based on the first map by a predetermined amount A in the same engine operation states of the engine rotational speed NE and the fuel injection quantity Q.

During the non-execution of the EGR amount-decreasing processing, the first map is selected and the basic vane opening degree VNb is set based on the first map. During the execution of the EGR amount-decreasing processing, the second map is selected and the basic vane opening degree VNb is set based on the second map.

Even in this modification example, the exhaust gas flow rate can lower during the execution of the EGR amount-decreasing processing than during the non-execution of the EGR amount-decreasing processing. The predetermined amount A described above may vary depending on engine rotational speed regions or fuel injection quantity regions (that is, engine load regions).

The fuel injection quantity Q may be increased during the execution of the exhaust gas amount-decreasing processing than during the non-execution of the exhaust gas amount-decreasing processing in a similar manner. For example, a first map and a second map are prepared in advance. The first map and the second map are maps for setting the basic fuel injection quantity Qb based on the engine operation states, and the first map is selected during the non-execution of the exhaust gas amount-decreasing processing and the second map is selected during the execution of the exhaust gas amount-decreasing processing. Then, the second map is set so that the basic fuel injection quantity Qb that is set when the second map is selected exceeds the basic fuel injection quantity Qb that is set when the first map is selected by a predetermined amount B in the same engine operation state. Even in this modification example, the fuel injection quantity pertaining to a case where the exhaust gas amount-decreasing processing is executed can exceed the fuel injection quantity pertaining to a case where the exhaust gas amount-decreasing processing is not executed. The predetermined amount B may vary depending on the engine operation regions.

A mechanism other than the nozzle vane 11v of the turbocharger 11 may be used as the exhaust gas flow rate adjusting mechanism. For example, the intake throttle valve 16 may be used as the exhaust gas flow rate adjusting mechanism since the exhaust gas flow rate decreases as the opening degree of the intake throttle valve 16 decreases. In addition, an exhaust throttle valve that adjusts the exhaust gas flow rate may be disposed in the exhaust passage 26 on the exhaust upstream side of the turbocharger 11.

A condition other than the condition that the slip amount NHS of the ammonia desorbed from the SCR catalyst 41 is equal to or higher than the threshold α may be set as the ammonia slip occurrence condition. Simply, for example, it may be determined that the ammonia slip occurrence condition is satisfied when the temperature of the exhaust gas that flows into the SCR catalyst 41 is likely to exceed a temperature determined in advance or actually exceeds the temperature determined in advance since the slip amount NHS of the ammonia tends to increase as the exhaust gas temperature increases.

A reducing agent that contains another ammonia component may be used, instead of the urea water, as the reducing agent.

A control device for an internal combustion engine is provided. The electronic control unit (80) is configured to control exhaust gas recirculation devices (13, 14, 15) as EGR amount-decreasing processing when an ammonia slip occurrence condition with regard to the catalyst (41) is satisfied such that an EGR amount as the amount of the exhaust gas returning to the intake passage is smaller when the occurrence condition is not satisfied than when the occurrence condition is satisfied. The electronic control unit (80) is configured to control an exhaust gas flow rate adjusting mechanism (11v) as exhaust gas amount-decreasing processing when the EGR amount-decreasing processing is executed such that the flow rate of the exhaust gas during the execution of the EGR amount-decreasing processing is lower than during a non-execution of the EGR amount-decreasing processing.

## Claims

1. A control device for an internal combustion engine, the internal combustion engine including exhaust gas recirculation devices (13, 14, 15), an adding mechanism (200), a catalyst (41), and an exhaust gas flow rate adjusting mechanism (11v), the exhaust gas recirculation devices (13, 14, 15) being configured to allow some of exhaust gas in an exhaust passage of the internal combustion engine to return to an intake passage, the adding mechanism (200) being configured to add a reducing agent containing an ammonia component into the exhaust passage, the catalyst (41) being configured to purify NOx in the exhaust gas by using ammonia derived from the reducing agent, the exhaust gas flow rate adjusting mechanism (11v) being configured to adjust a flow rate of the exhaust gas flowing into the catalyst (41), the catalyst (41) being positioned on a downstream side of the adding mechanism (200) and the exhaust gas flow rate adjusting mechanism (11v) in the exhaust passage, the control device **characterized by** comprising:
an electronic control unit (80) configured to control the exhaust gas recirculation devices (13, 14, 15) as EGR amount-decreasing processing when an ammonia slip occurrence condition with regard to the catalyst (41) is satisfied such that an EGR amount as the amount of the exhaust gas returning to the intake passage is smaller when the occurrence condition is not satisfied than when the occurrence condition is satisfied, the electronic control unit (80) being configured to control the exhaust gas flow rate adjusting mechanism (11v) as exhaust gas amount-decreasing processing when the EGR amount-decreasing processing is executed such that the flow rate of the exhaust gas during the execution of the EGR amount-decreasing processing is lower than during a non-execution of the EGR amount-decreasing processing.

2. The control device according to claim 1,
wherein the electronic control unit (80) is configured to control the exhaust gas flow rate adjusting mechanism (11v) such that a decrement in the flow rate of the exhaust gas attributable to the exhaust gas amount-decreasing processing increases as a decrement in the EGR amount attributable to the EGR amount-decreasing processing increases.

3. The control device according to claim 2,
wherein the electronic control unit (80) is configured to set the decrement in the flow rate of the exhaust gas based on the decrement in the EGR amount attributable to the EGR amount-decreasing processing.

4. The control device according to claim 1,
wherein the electronic control unit (80) includes a storage device, the storage device having a first map selected during the execution of the EGR amount-decreasing processing and setting an operation amount of the exhaust gas flow rate adjusting mechanism (11v) and a second map selected during the non-execution of the EGR amount-decreasing processing and setting an operation amount of the exhaust gas flow rate adjusting mechanism (11v), the operation amount set when the second map is selected is set such that the flow rate of the exhaust gas adjusted by the exhaust gas flow rate adjusting mechanism (11v) based on the operation amount set when the second map is selected is lower than when the first map is selected in the same engine operation state.

5. The control device according to any one of claims 1 to 4,
wherein the internal combustion engine includes a variable displacement exhaust-driven turbocharger (11) having a movable vane,
wherein the exhaust gas flow rate adjusting mechanism (11v) is the movable vane,
wherein the operation amount is an opening degree of the vane, and
wherein the exhaust gas flow rate adjusting mechanism (11v) is configured to decrease the flow rate of the exhaust gas by decreasing the opening degree of the vane.

6. The control device according to claim 5,
wherein the electronic control unit (80) is configured to execute a fuel injection quantity-increasing correction when the exhaust gas amount-decreasing processing is executed.

7. The control device according to claim 6,
wherein the electronic control unit (80) is configured to execute the fuel injection quantity-increasing correction such that a correction amount for the fuel injection quantity-increasing correction increases as a decrement in the opening degree of the vane attributable to the exhaust gas amount-decreasing processing increases.

8. The control device according to any one of claims 1 to 7,
wherein the occurrence condition includes an operation condition of the internal combustion engine in which a slip amount of the ammonia desorbed from the catalyst is at least a predetermined threshold.

## Patentansprüche

1. Steuerungsvorrichtung für eine Brennkraftmaschine, wobei die Brennkraftmaschine Abgasrückführungsvorrichtungen (13, 14, 15), einen Zugabemechanismus (200), einen Katalysator (41) und einen Abgasdurchflussrateneinstellungsmechanismus (11v) enthält, wobei die Abgasrückführungsvorrichtungen (13, 14, 15) gestaltet sind, um zu ermöglichen, das etwas Abgas in einem Abgasdurchgang der Brennkraftmaschine in einen Einlassdurchgang zurückgeführt wird, wobei der Zugabemechanismus (200) gestaltet ist, um ein Reduziermittel in den Abgasdurchgang hinzuzugeben, das eine Ammoniakkomponente enthält, wobei der Katalysator (41) gestaltet ist, um NOx in dem Abgas unter Verwendung von Ammoniak zu reinigen, das von dem Reduziermittel erhalten wird, wobei der Abgasdurchflussrateneinstellungsmechanismus (11v) gestaltet ist, um eine Durchflussrate des Abgases einzustellen, das in den Katalysator (41) strömt, wobei der Katalysator (41) an einer stomabwärtigen Seite des Zugabemechanismus (200) und des Abgasdurchflussrateneinstellungsmechanismus (11v) in dem Abgasdurchgang positioniert ist, wobei die Steuerungseinrichtung **dadurch gekennzeichnet ist, dass** sie Folgendes aufweist:
eine elektronische Steuereinheit (80), die gestaltet ist, um die Abgasrückführungsvorrichtungen (13, 14, 15) als EGR Betragsverringerungsvorgang derart zu steuern, wenn eine Ammoniakschlupfauftittsbedingung bezüglich des Katalysators (41) erfüllt ist, dass ein EGR Betrag als der Betrag des Abgas, der in den Einlassdurchgang zurückgeführt wird, kleiner ist, wenn die Auftrittsbedingung nicht erfüllt ist, als wenn die Auftrittsbedingung erfüllt ist, wobei die elektronische Steuereinheit (80) gestaltet ist, um den Abgasdurchflussrateneinstellungsmechanismus (11v) als Abgasbetragsverringerungsvorgang derart zu steuern, wenn der EGR Betragsverringerungsvorgang ausgeführt wird, dass die Strömungsrate des Abgases während der Ausführung des EGR Betragsverringerungsvorgang geringer ist als während der EGR Betragsverringerungsvorgang nicht ausgeführt wird.

2. Steuerungsvorrichtung für eine Brennkraftmaschine gemäß Anspruch 1,
wobei die elektronische Steuereinheit (80) gestaltet ist, um den Abgasdurchflussrateneinstellungsmechanismus (11v) derart zu steuern, dass eine Abnahme in der Durchflussrate des Abgases, die dem Abgasbetragsverringerungsvorgang zuzuschreiben ist, zunimmt, wenn eine Abnahme des EGR Betrags, der dem EGR Betragsverringerungsvorgang zuzuschreiben ist, zunimmt.

3. Steuerungsvorrichtung gemäß Anspruch 2,
wobei die elektronische Steuereinheit (80) gestaltet ist, um die Abnahme der Durchflussrate des Abgases basierend auf der Abnahme in dem EGR Betrag, die dem EGR Betragsverringerungsvorgang zuzuschreiben ist, festzulegen.

4. Steuerungsvorrichtung gemäß Anspruch 1,
wobei die elektronische Steuereinheit (80) eine Speichereinrichtung enthält, wobei die Speichereinrichtung ein erstes Kennfeld, das während der Ausführung des EGR Betragsverringerungsvorgangs ausgewählt ist und einen Betriebsbetrag des Abgasdurchflussrateneinstellungsmechanismus (11v) festsetzt, und ein zweites Kennfeld hat, das ausgewählt ist während der EGR Betragsverringerungsvorgang nicht ausgeführt wird und einen Betriebsbetrag des Abgasdurchflussrateneinstellungsmechanismus (11v) festlegt, wobei der festgelegte Betriebsbetrag, wenn das zweite Kennfeld ausgewählt ist, derart festgelegt ist, dass die Durchflussrate des Abgases, die durch den Abgasdurchflussrateneinstellungsmechanismus (11v) eingestellt ist, basierend auf den festgelegten Betriebsbetrag, wenn das zweite Kennfeld ausgewählt ist, niedriger ist als wenn das erste Kennfeld in dem gleichen Maschinenbetriebszustand ausgewählt ist.

5. Steuerungsvorrichtung gemäß einem der Ansprüche 1 bis 4,
wobei die Brennkraftmaschine einen verstellbaren abgasbetriebenen Lader (11) mit einer beweglichen Schaufel enthält,
wobei der Abgasdurchflussrateneinstellungsmechanismus (11v) die bewegliche Schaufel ist,
wobei der Betriebsbetrag ein Öffnungsgrad der Schaufel ist, und
wobei der Abgasdurchflussrateneinstellungsmechanismus (11v) gestaltet ist, um die Durchflussrate des Abgases durch eine Verringerung des Öffnungsgrades des Flügels zu verringern.

6. Steuerungsvorrichtung gemäß Anspruch 5,
wobei die elektronische Steuereinheit (80) gestaltet ist, um eine Kraftstoffeinspritzmengenerhöhungskorrektur auszuführen, wenn der Abgasbetragsverringerungsvorgang ausgeführt wird.

7. Steuerungseinrichtung gemäß Anspruch 6,
wobei die elektronische Steuereinheit (80) gestaltet ist, um die Kraftstoffeinspritzmengenerhöhungskorrektur derart auszuführen, dass sich ein Korrekturbetrag für die Kraftstoffeinspritzmengenerhöhungskorrektur erhöht, wenn sich eine Abnahme in dem Öffnungsgrad des Flügels, die dem Abgasmengenverringerungsvorgang zuzuschreiben ist, erhöht.

8. Steuerungseinrichtung gemäß einem der Ansprüche 1 bis 7,
wobei die Auftrittsbedingung eine Betriebsbedingung der Brennkraftmaschine enthält, bei der ein Schlupfbetrag des Ammoniaks, das von dem Katalysator desorbiert wird, mindestens ein vorbestimmter Schwellwert ist.

## Revendications

1. Dispositif de contrôle pour un moteur à combustion interne, le moteur à combustion interne comprenant des dispositifs de recirculation de gaz d'échappement (13, 14, 15), un mécanisme d'addition (200), un catalyseur (41), et un mécanisme d'ajustement de débit de gaz d'échappement (11v), les dispositifs de recirculation de gaz d'échappement (13, 14, 15) étant configurés pour permettre à certains gaz d'échappement dans un passage d'échappement du moteur à combustion interne de retourner vers un passage d'admission, le mécanisme d'addition (200) étant configuré pour ajouter un agent réducteur contenant un constituant d'ammoniac dans le passage d'échappement, le catalyseur (41) étant configuré pour purifier NOx dans les gaz d'échappement en utilisant l'ammoniac dérivé de l'agent réducteur, le mécanisme d'ajustement de débit de gaz d'échappement (11v) étant configuré pour ajuster un débit des gaz d'échappement s'écoulant dans le catalyseur (41), le catalyseur (41) étant disposé sur un côté aval du mécanisme d'addition (200) et du mécanisme d'ajustement de débit de gaz d'échappement (11v) dans le passage d'échappement, le dispositif de contrôle **caractérisé en ce qu'**il comprend :
une unité de contrôle électronique (80) configurée pour contrôler les dispositifs de recirculation de gaz d'échappement (13, 14, 15) comme traitement de diminution de quantité EGR lorsqu'une condition d'apparition de rejet d'ammoniac par rapport au catalyseur (41) est satisfaite de sorte qu'une quantité EGR comme la quantité des gaz d'échappement retournant vers le passage d'admission est inférieure lorsque la condition d'apparition n'est pas satisfaite que lorsque la condition d'apparition est satisfaite, l'unité de contrôle électronique (80) étant configurée pour contrôler le mécanisme d'ajustement de débit de gaz d'échappement (11v) comme traitement de diminution de quantité de gaz d'échappement lorsque le traitement de diminution de quantité EGR est exécuté de sorte que le débit des gaz d'échappement pendant l'exécution du traitement de diminution de quantité EGR est inférieur à celui pendant une non-exécution du traitement de diminution de quantité EGR.

2. Dispositif de contrôle selon la revendication 1,
dans lequel l'unité de contrôle électronique (80) est configurée pour contrôler le mécanisme d'ajustement de débit de gaz d'échappement (11v) de sorte qu'un décrément du débit des gaz d'échappement pouvant être attribué au traitement de diminution de quantité de gaz d'échappement augmente lorsqu'un décrément de la quantité EGR pouvant être attribué au traitement de diminution de quantité EGR augmente.

3. Dispositif de contrôle selon la revendication 2,
dans lequel l'unité de contrôle électronique (80) est configurée pour fixer le décrément du débit des gaz d'échappement sur la base du décrément de la quantité EGR pouvant être attribué au traitement de diminution de quantité EGR.

4. Dispositif de contrôle selon la revendication 1,
dans lequel l'unité de contrôle électronique (80) comprend un dispositif de stockage, le dispositif de stockage présentant une première carte choisie pendant l'exécution du traitement de diminution de quantité EGR et fixant une quantité de fonctionnement du mécanisme d'ajustement de débit de gaz d'échappement (11v) et une seconde carte choisie pendant la non-exécution du traitement de diminution de quantité EGR et fixant une quantité de fonctionnement du mécanisme d'ajustement de débit de gaz d'échappement (11v), la quantité de fonctionnement fixée lorsque la seconde carte est choisie est fixée de sorte que le débit des gaz d'échappement ajusté par le mécanisme d'ajustement de débit de gaz d'échappement (11v) sur la base de la quantité de fonctionnement fixée lorsque la seconde carte est choisie est inférieur à lorsque la première carte est choisie dans le même état de fonctionnement de moteur.

5. Dispositif de contrôle selon l'une quelconque des revendications 1 à 4,
dans lequel le moteur à combustion interne comprend un turbocompresseur entraîné par des gaz d'échappement à déplacement variable (11) présentant une pale mobile,
dans lequel le mécanisme d'ajustement de débit de gaz d'échappement (11v) est la pale mobile,
dans lequel la quantité de fonctionnement est un degré de fonctionnement de la pale, et
dans lequel le mécanisme d'ajustement de débit de gaz d'échappement (11v) est configuré pour diminuer le débit des gaz d'échappement par diminution du degré d'ouverture de la pale.

6. Dispositif de contrôle selon la revendication 5,
dans lequel l'unité de contrôle électronique (80) est configurée pour exécuter une correction d'augmentation de quantité d'injection de carburant lorsque le traitement de diminution de quantité de gaz d'échappement est exécuté.

7. Dispositif de contrôle selon la revendication 6,
dans lequel l'unité de contrôle électronique (80) est configurée pour exécuter la correction d'augmentation de quantité d'injection de carburant de sorte qu'une quantité de correction pour la correction d'augmentation de quantité d'injection de carburant augmente lorsqu'un décrément dans le degré d'ouverture de la pale pouvant être attribué au traitement de diminution de quantité de gaz d'échappement augmente.

8. Dispositif de contrôle selon l'une quelconque des revendications 1 à 7,
dans lequel la condition d'apparition comprend une condition de fonctionnement du moteur à combustion interne dans laquelle une quantité de glissement de l'ammoniac désorbé du catalyseur est au moins un seuil prédéterminé.
